# FASCICULE DE BREVET EUROPEEN

(11) **EP 1 031 707 B1**
(45) Date de publication et mention de la délivrance du brevet: **08.01.2003**
(21) Numéro de dépôt: 00400274.7
(22) Date de dépôt: 01.02.2000
(51) Int. Cl.: F01N 3/02, F01N 3/28, F02M 25/00, F02D 19/12

(54) **Dispositif d'introduction automatique d'un additif dans le réservoir de carburant d'un véhicule automobile**
Vorrichtung zur automatische Zugabe eines Additivs in einem Fahrzeugkraftstoffes
Device for automatic additive supply in an automotive fuel tank

(30) Priorité: 26.02.1999 FR 9902466
(43) Date de publication de la demande: 30.08.2000
(73) Titulaire: Peugeot Citroen Automobiles SA, 92200 Neuilly sur Seine (FR)
(72) Inventeur: Chandebois, Michael, 93420 Villepinte (FR)
(74) Mandataire: Lanceplaine, Jean-Claude

(56) Documents cités:
- EP-A- 0 590 814
- DE-A- 19 805 311
- FR-A- 2 668 203
- US-A- 5 303 842

## Description

La présente invention concerne un dispositif d'introduction automatique en quantités dosées d'un additif dans le réservoir de carburant d'un véhicule automobile.

Les gaz d'échappement des moteurs à allumage par compression et notamment des moteurs Diesel qui utilisent du gazole comme carburant renferment à la fois des polluants gazeux tels que des hydrocarbures, des oxydes d'azote et du monoxyde de carbone CO et des polluants solides qui sont principalement constitués par des particules de suie.

Les normes antipollution appliquées aux moteurs Diesel sont de plus en plus sévères et exigent l'élimination pratiquement complète des émissions de particules de suie dans les gaz d'échappement de ces moteurs.

Pour assurer l'élimination de ces particules de suie, les constructeurs de véhicules automobiles sont amenés à prévoir un post-traitement des gaz d'échappement en utilisant un filtre à particules.

Un tel filtre est installé dans la ligne d'échappement du moteur et comporte des éléments de filtration en matière céramique poreuse qui sont traversés par les gaz d'échappement et qui permettent de retenir les particules solides en suspension dans ces gaz.

Au cours du fonctionnement du moteur, les éléments de filtration se chargent en particules de suie et se colmatent progressivement. Le décolmatage des éléments de filtration peut être obtenu en faisant brûler les suies déposées sur ces éléments, pendant le fonctionnement du moteur.

En présence d'oxygène, les suies brûlent à des températures de l'ordre de 550 à 600°C. De tels niveaux thermiques ne sont que rarement atteints par les gaz d'échappement d'un moteur Diesel d'un véhicule de tourisme. Il est donc nécessaire de favoriser le début de la régénération des éléments de filtration, en ajoutant au carburant un additif permettant d'abaisser la température de régénération des suies.

Les additifs les plus couramment utilisés sont constitués par des composés organo-métalliques qui, mélangés dans des proportions déterminées au gazole, sont injectés dans la chambre de combustion, par la pompe d'injection, et se retrouvent dans les gaz d'échappement.

La présence de ces additifs dans le filtre à particules, en mélange intime avec les particules de suie, leur permet de jouer le rôle de catalyseur de la combustion des particules de suie et d'abaisser les températures d'inflammation des suies aux environs de 400 à 450°C.

Pour jouer parfaitement le rôle de catalyseur, les additifs doivent être mélangés de manière homogène au gazole utilisé comme carburant.

Une solution qui a été envisagée consiste à mélanger ces additifs au gazole, à l'issue du processus industriel d'obtention du carburant, dans les usines pétrolières productrices. Le gazole renfermant les additifs de régénération des filtres à particules serait alors vendu à la pompe et constituerait un produit particulier, dans le cadre de la vente au détail des carburants.

L'inconvénient d'un tel procédé et de l'organisation correspondante de la vente est de nécessiter de prévoir une variété supplémentaire de carburant et d'entraîner une dépendance complète des utilisateurs et fabricants de moteurs, vis-à-vis à des choix effectués par l'industrie pétrolière, en ce qui concerne la nature des additifs et la composition des mélanges d'additifs retenue.

En effet, il peut être nécessaire d'adapter la composition des additifs aux caractéristiques du moteur dans lequel ils sont utilisés.

Une autre solution connue consiste à incorporer les additifs au carburant, de manière automatique, à l'intérieur du réservoir du véhicule à l'issue de chacune des opérations de remplissage de ce réservoir.

Le dosage des additifs est effectué de manière que la concentration du carburant en additif à l'intérieur du réservoir reste parfaitement constante.

Lors de leur passage dans la chambre de combustion du moteur, les additifs sous forme d'organo-métalliques se transforment en particules d'oxydes métalliques intimement mêlées aux particules de suie.

La concentration prédéterminée de l'additif dans le carburant est fixée à une valeur telle que le carburant injecté dans les cylindres du moteur renferme constamment une quantité d'additif suffisante pour abaisser la température de recombustion des suies dans le filtre à particules du véhicule, jusqu'à un niveau assurant une combustion satisfaisante même lorsque le niveau de charge du moteur est faible.

A cet effet, pour déterminer la quantité d'additif à injecter dans le réservoir de carburant du véhicule, on mesure le niveau initial du carburant dans le réservoir, préalablement à chaque opération de réapprovisionnement de ce réservoir, on mesure le niveau final du carburant dans le réservoir et on détermine, d'une part, la quantité de carburant introduite dans le réservoir à chaque opération de réapprovisionnement à partir du niveau initial et du niveau final mesurés et, d'autre part, la quantité d'additif contenue dans une quantité de carburant égale à la quantité introduite dans ledit réservoir.

La mesuré et l'enregistrement du niveau de carburant dans le réservoir sont commandés de manière automatique lors de l'ouverture et de la fermeture d'un bouchon d'obturation du conduit de remplissage du réservoir ou lors de l'ouverture et de la fermeture d'une trappe d'obturation d'une partie de la carrosserie du véhicule donnant accès à des moyens de remplissage de ce réservoir.

L'inconvénient de ce système d'introduction automatique en quantités dosées d'un additif dans le réservoir de carburant du véhicule réside principalement dans sa complexité du fait de la présence d'un détecteur de la position du bouchon du réservoir de carburant ou de l'ouverture et de la fermeture de la trappe d'obturation ainsi que dans le boîtier électronique de gestion des différents paramètres qui doit détecter la présence du bouchon ou l'ouverture de la trappe, quantifier les apports en carburant, effectuer les contrôles de cohérence avec des informations provenant du véhicule, comme par exemple sa vitesse, la position de la clé de contact et le niveau de carburant.

On connaît également dans le document FR-A-2 668 203, un dispositif d'introduction automatique en quantités dosées d'un additif dans le réservoir de carburant d'un véhicule automobile, comportant un filtre à particules placé sur la ligne d'échappement du moteur du véhicule, pour maintenir à une valeur prédéterminée la concentration de l'additif dans le carburant obtenu dans le réservoir et comportant,
- un réservoir d'additif équipé d'une jauge de détection d'un niveau minimal d'additif dans ce réservoir et d'une jauge de mesure de la température de cet additif dans ledit réservoir,
- des moyens d'injection d'additif reliés au réservoir d'additif et au réservoir de carburant et formés par une pompe et un injecteur,
- des moyens de mesure de la quantité de carburant introduite dans le réservoir au cours de chaque opération de réapprovisionnement, et
- des moyens de calcul et de commande permettant de calculer la quantité correspondante d'additif à injecter dans le réservoir pour maintenir la concentration d'additif dans le carburant contenu dans ledit réservoir à une valeur prédéterminée et de commander les moyens d'injection pour réaliser l'injection de la quantité d'additif calculée.

Ce dispositif ne permet pas d'obtenir une bonne homogénéisation du mélange additif-carburant.

L'invention a pour but d'éviter ces inconvénients en proposant un dispositif d'introduction automatique en quantités dosées d'un additif dans le réservoir de carburant d'un véhicule automobile, particulièrement simple à mettre en oeuvre et qui permet de maintenir à une valeur prédéterminée la concentration de l'additif dans le carburant contenu dans le réservoir et d'éviter toute erreur de dosage.

L'invention a pour objet un dispositif d'introduction automatique en quantités dosées d'un additif dans le réservoir de carburant d'un véhicule automobile, comportant un filtre à particules placé sur la ligne d'échappement du véhicule, pour maintenir à une valeur prédéterminée la concentration de l'additif dans le carburant contenu dans le réservoir, ledit dispositif étant intégré au véhicule et comportant:
- un réservoir d'additif équipé d'une jauge de détection d'un niveau minimal d'additif dans ce réservoir et d'une jauge de mesure de la température de cet additif dans ledit réservoir,
- des moyens d'injection d'additif reliés au réservoir d'additif et au réservoir de carburant et formés par une pompe et un injecteur,
- des moyens de mesure de la quantité de carburant introduite dans le réservoir au cours de chaque opération de réapprovisionnement, et
- des moyens de calcul et de commande permettant de calculer la quantité correspondante d'additif à injecter dans le réservoir pour maintenir la concentration d'additif dans le carburant contenu dans ledit réservoir à une valeur prédéterminée et de commander les moyens pour réaliser l'injection de la quantité d'additif calculée caractérisé en ce que:
   - lesdits moyens d'injection débouchant directement dans ledit réservoir de carburant,
   - lesdits moyens de mesure comprennent un débitmètre mono-directionnel placé directement dans la tubulure de remplissage dudit réservoir.

Selon une autre caractéristique de L'invention, la pompe et l'injecteur sont disposés l'un à la suite de l'autre sur une conduite reliée au réservoir d'additif,

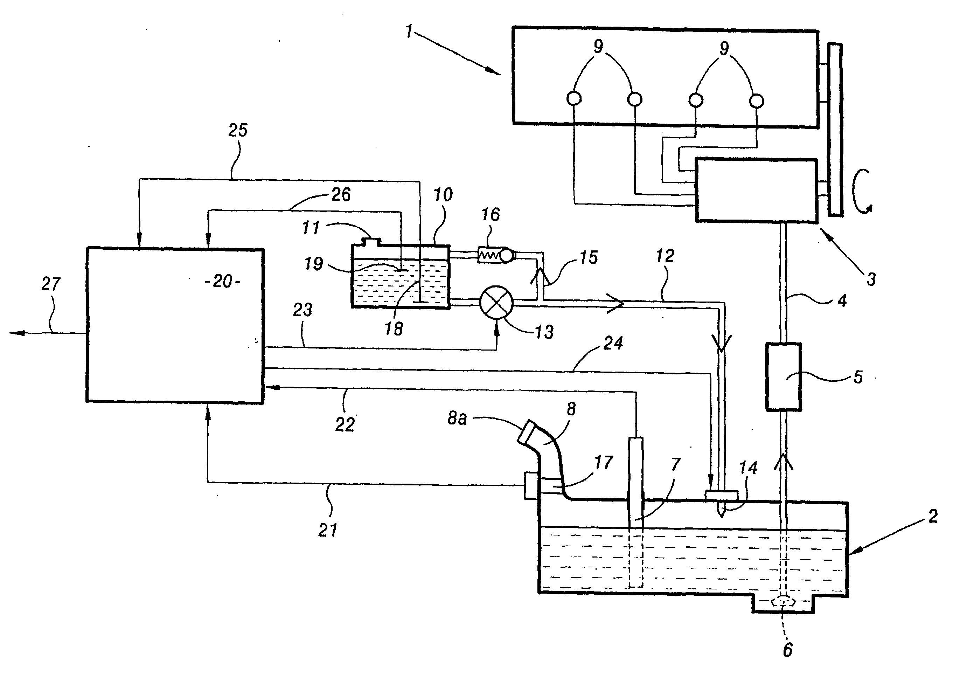

Les caractéristiques et avantages de l'invention apparaîtront au cours de la description qui va suivre, donnée à titre d'exemple et faite en référence à la figure unique annexée qui est une vue schématique montrant un dispositif d'introduction en quantités dosées d'un additif dans le réservoir de carburant d'un véhicule automobile.

Sur la figure, on a représenté schématiquement un moteur Diesel, désigné dans son ensemble par la référence 1, d'un véhicule automobile et qui est alimenté en gazole à partir d'un réservoir 2, par l'intermédiaire d'une pompe d'injection 3.

La pompe d'injection 3 est reliée au réservoir 2 par une conduite d'aspiration 4 sur laquelle est intercalé un filtre 5.

La conduite d'aspiration 4 comporte une partie d'extrémité opposée à la pompe 3 qui est plongée à l'intérieur du réservoir 2 pour déboucher, à sa partie inférieure, sous la forme d'une crépine d'aspiration 6.

De plus, la pompe 3 est reliée aux cylindres du moteur 1 par des conduites assurant chacune l'alimentation d'un injecteur 9 associé à un cylindre du moteur.

Le réservoir 2 est équipé d'une jauge de niveau 7 permettant de déterminer la position du niveau du gazole dans ce réservoir 2.

Le réservoir 2 comporte également une tubulure de remplissage 8 débouchant dans la partie supérieure de ce réservoir 2 et équipée d'un bouchon de fermeture 8a.

La ligne d'échappement du véhicule, dont la propulsion est assurée par le moteur Diesel, comporte un filtre à particules, non représenté, permettant d'arrêter les particules de suie formées dans les gaz d'échappement du moteur.

Le véhicule comporte un réservoir d'additif 10 muni d'un bouchon de remplissage 11 et destiné à contenir un additif qui peut être constitué par un ou plusieurs composés organo-métalliques en solution dans un solvant liquide.

Une conduite 12 d'injection d'additif liquide est reliée au réservoir d'additif 10, au voisinage de sa partie inférieure. Une pompe de dosage 13 est intercalée sur la conduite 12 qui est reliée, à son extrémité opposée au réservoir d'additif 10, à un injecteur 14 débouchant directement dans le réservoir de carburant 2.

Une conduite de retour 15 communiquant avec la conduite d'injection 12, en aval de la pompe 13, est reliée à la partie supérieure du réservoir d'additif 10. Un régulateur de pression 16 constitué par un clapet à bille comportant un ressort de tarage est intercalé sur la conduite de retour 15.

Le dispositif d'introduction automatique d'additif selon l'invention comporte un boîtier électronique de commande 20 intégré au véhicule et permettant d'assurer toutes les fonctions de réglage et de surveillance de l'introduction d'additif en quantités dosées dans le réservoir de carburant 2 du véhicule.

Le dispositif d'introduction automatique d'additif comporte également des moyens de mesure de la quantité de carburant introduite dans le réservoir 2 au cours de chaque opération de réapprovisionnement.

Ainsi que représenté sur la figure, ces moyens de mesure sont formés par un débitmètre mono-directionnel 17 placé directement dans la tubulure 8 de remplissage du réservoir de carburant 2.

Le débitmètre 17 est relié au boîtier électronique 20 par un câble électrique 21 qui permet de transmettre automatiquement audit boîtier 20 la quantité de carburant introduite dans le réservoir 2 lors du réapprovisionnement de ce réservoir 2 en carburant.

La jauge de niveau 7 associée au réservoir de carburant 2 est reliée par un câble électrique 22 au boîtier 20, de manière à transmettre à ce boîtier 20 ainsi qu'au conducteur du véhicule, un signal électrique représentatif du niveau de carburant à l'intérieur dudit réservoir 2.

Le boîtier électronique 20 est relié par des câbles électriques, respectivement 23 et 24, à la pompe 13 et à l'injecteur 14, de manière à transmettre à ces éléments du dispositif d'introduction d'additif un signal de commande assurant une injection en quantités dosées d'additif dans le réservoir 2 de carburant, dans les conditions qui seront décrites ultérieurement.

Une jauge de niveau 18 reliée au boîtier électronique 20 par un câble électrique 25 permet de transmettre à ce boîtier 20 un signal électrique lorsque le niveau d'additif dans le réservoir 10 est parvenu dans une position minimale voisine du fond de ce réservoir 10.

Une sonde de température 19 disposée dans le réservoir d'additif 10 permet de transmettre au boîtier électronique 20, par l'intermédiaire d'un câble électrique 26, un signal représentatif de la température de cet additif liquide à l'intérieur dudit réservoir 10.

Le boîtier électronique 20 comporte au moins une sortie 27 constituée par au moins un câble électrique relié à des voyants qui peuvent être situés avantageusement dans l'habitacle du véhicule automobile.

L'allumage d'un premier voyant est obtenu lorsque le niveau d'additif détecté par la jauge 18 dans le réservoir d'additif 10 est parvenu dans la position correspondant au niveau minimal voisin du fond de ce réservoir 10 et l'allumage d'un second voyant est obtenu lorsque le niveau de carburant détecté par la jauge 7 dans le réservoir de carburant 2 est parvenu dans une position correspondant au niveau minimal voisin du fond de ce réservoir de carburant 2.

Le boîtier électronique 20 reçoit également comme donnée d'entrée un signal électrique représentatif de la concentration déterminée en additif qu'il est nécessaire de maintenir dans le carburant, c'est-à-dire dans le gazole injecté dans les cylindres 9 du moteur 1.

Cette donnée relative à la concentration d'additif dans le carburant peut être également déterminée a priori et correspondre à une valeur fixe quelles que soient les conditions d'utilisation du moteur. Dans ce cas, les composants électroniques sont prévus de manière à prendre en compte cette valeur prédéterminée et invariable.

Certains éléments du dispositif d'introduction d'additif peuvent être constitués par des éléments utilisés de manière classique pour la construction des moteurs de véhicules automobiles et de leurs organes de commande.

C'est ainsi que l'ensemble d'injection d'additif comprenant la pompe 13, le régulateur de pression 16 et éventuellement l'injecteur 14 peut être constitué par un dispositif d'injection classique tel qu'utilisé sur les véhicules automobiles comportant un moteur à injection.

En se reportant maintenant à la figure, on va décrire le fonctionnement du dispositif d'introduction automatique en quantités dosées d'additif dans le réservoir de carburant du véhicule automobile pour maintenir à une valeur prédéterminée la concentration de l'additif dans le carburant.

Lorsque l'utilisateur du véhicule effectue un réapprovisionnement du réservoir 2 en carburant, il introduit le pistolet de la pompe dans la tubulure de remplissage 8.

Ainsi, au cours de l'écoulement du carburant dans cette tubulure 8, le débitmètre 17 mesure directement, dans la tubulure 8, la quantité de carburant introduite dans le réservoir 2.

Le débitmètre 17 transmet donc par le câble électrique 21 le signal représentatif de la quantité de carburant introduite dans le réservoir 2.

Au démarrage du moteur 1, le contact électrique du véhicule permet de mettre en fonctionnement le boîtier électronique 20 pour la détermination et la réalisation de l'injection d'additif dans le réservoir de carburant 2.

A cet effet, le boîtier de commande 20 effectue le calcul de la quantité d'additif à introduire dans le réservoir 2, en fonction de la quantité de carburant introduite dans ce réservoir 2 et de la concentration prédéterminée en additif du carburant, pour obtenir des conditions de fonctionnement satisfaisantes du filtre à particules.

Le signal représentatif de la quantité d'additif à introduire dans le réservoir de carburant 2 est transformé en un signal de commande de la pompe d'injection 13 et en un signal de commande de l'injecteur 14.

Le signal de commande de l'injecteur 14 permet de maintenir cet injecteur ouvert pendant un temps suffisant pour réaliser l'injection de la quantité déterminée d'additif à pression constante dans le réservoir de carburant 2, la pompe 13 restant en fonctionnement pendant un temps suffisant pour réaliser cette injection directement dans ledit réservoir de carburant 2.

A l'issue de l'injection d'additif, le gazole contenu dans le réservoir 2 présente une concentration en additif qui correspond parfaitement à la concentration prédéterminée nécessaire pour obtenir un fonctionnement satisfaisant du filtre à particules.

En outre, la concentration en additif du gazole dans le réservoir 2 est parfaitement homogène du fait du brassage assuré par la pompe d'injection 3.

Le moteur 1 et le filtre à particules qui lui est associé dans la ligne d'échappement peuvent alors fonctionner dans des conditions satisfaisantes.

La température de l'additif injecté directement dans le réservoir 2 peut être réglée grâce à la jauge de température 19 et un circuit de mise en température de l'additif dans le réservoir 10.

Selon une variante, la température mesurée par la jauge 19 peut être prise en compte par le boîtier électronique 20 pour calculer le temps d'injection de l'additif à température constante. En effet, le temps d'injection d'une quantité déterminée d'additif à pression constante varie en fonction de la viscosité, donc de la température de cet additif.

Le dispositif suivant l'invention permet de maintenir dans le réservoir de carburant du véhicule une concentration parfaitement constante d'additif quelles que soient les conditions de fonctionnement du moteur.

Ainsi, le filtre à particules fonctionne dans des conditions satisfaisantes en ce qui concerne sa régénération.

Il est simplement nécessaire de maintenir un niveau suffisant d'additif dans le réservoir correspondant ce qui nécessite d'effectuer un réapprovisionnement de ce réservoir lorsque le voyant de niveau minimal s'allume. La capacité du réservoir peut être déterminée en conséquence. Par rapport aux dispositifs utilisés jusqu'à présent, le dispositif selon l'invention permet de simplifier le logiciel embarqué et de diminuer d'autant la taille des mémoires de ce logiciel.

De plus, la fiabilité de fonctionnement est supérieure par rapport aux dispositifs utilisés étant donné que le dispositif selon l'invention ne tient plus compte du jaugeage et de ses erreurs.

Enfin, la précision de dosage de l'additif dans le carburant est augmentée et la précision de dosage devient constante quel que soit l'apport en carburant.

Le boîtier électronique peut être réalisé en utilisant tout composant ou microprocesseur et en mettant en oeuvre les connaissances habituelles des techniciens dans le domaine de l'électronique.

Les jauges ou sondes de température utilisées peuvent être de tout type adapté aux mesures effectuées et à l'environnement dans lequel se déroulent ces mesures.

Enfin, le dispositif selon l'invention peut être réalisé non seulement pour assurer un maintien à une valeur constante de la valeur en additif du gazole utilisé comme carburant d'un moteur Diesel d'un véhicule comportant un filtre à particules, mais également pour introduire en quantités dosées un additif quelconque dans le réservoir de carburant d'un véhicule automobile, de manière à maintenir parfaitement constante la teneur en additif du carburant, que ce carburant soit constitué par du gazole, de l'essence ou tout autre produit similaire.

## Revendications

1. Dispositif d'introduction automatique en quantités dosées d'un additif dans le réservoir (2) de carburant d'un véhicule automobile, comportant un filtre à particules placé sur la ligne d'échappement du moteur (1) du véhicule, pour maintenir à une valeur prédéterminée la concentration de l'additif dans le carburant contenu dans le réservoir (2), ledit dispositif étant intégré au véhicule et comportant:
- un réservoir (10) d'additif équipé d'une jauge (18) de détection d'un niveau minimal d'additif dans ce réservoir (10) et d'une jauge (19) de mesure de la température de cet additif dans ledit réservoir (10),
- des moyens (13, 14) d'injection d'additif reliés au réservoir (10) d'additif et au réservoir (2) de carburant et formés par une pompe (13) et un injecteur (14),
- des moyens (17) de mesure de la quantité de carburant introduite dans le réservoir (2) au cours de chaque opération de réapprovisionnement, et
- des moyens (20) de calcul et de commande permettant de calculer la quantité correspondante d'additif à injecter dans le réservoir (2) pour maintenir la concentration d'additif dans le carburant contenu dans ledit réservoir (2) à une valeur prédéterminée et de commander les moyens (13, 14) d'injection pour réaliser l'injection de la quantité d'additif calculée.
**caractérisé en ce que**:
- lesdits moyens d'injection débouchent directement dans ledit réservoir (2) de carburant
- lesdit moyens de mesure comprennent un débitmètre (17) mono-directionnel placé directement dans la tubulure (8) de remplissage dudit réservoir (2).

2. Dispositif selon la revendication 1, **caractérisé en ce que** la pompe (13) et l'injecteur (14) sont disposés l'un à la suite de l'autre sur une conduite (12) reliée au réservoir d'additif (10).

3. Utilisation d'un dispositif selon la revendication 1 ou 2, pour l'introduction dans un réservoir (2) à gazole d'un véhicule automobile à moteur Diesel, d'un additif pour maintenir la concentration d'additif dans le carburant à une valeur de consigne et améliorer les conditions de fonctionnement d'un filtre à particules placé sur la ligne d'échappement du moteur.

## Patentansprüche

1. Vorrichtung zur automatischen Einführung eines Zusatzes in dosierten Mengen in den Kraftstoff-Behälter (2) eines Kraftfahrzeugs, das ein in der Abgasstrecke des Motors (1) des Fahrzeugs angeordnetes Teilchenfilter aufweist, um die Zusatz-Konzentration in dem im Behälter (2) enthaltenen Kraftstoff auf einem vorbestimmten Wert zu halten, wobei diese Vorrichtung in das Fahrzeug integriert ist und folgendes aufweist:
- einen Zusatz-Behälter (10) mit einem Messfühler (18) zur Erfassung eines Mindeststands des Zusatzes in dem Behälter (10) und einem Messfühler (19) zum Messen der Temperatur des Zusatzes im Behälter (10),
- Mittel (13, 14) zum Einspritzen von Zusatz, die mit dem Zusatz-Behälter (10) und mit dem Kraftstoff-Behälter (2) verbunden sind und aus einer Pumpe (13) und einem Einspritzer (14) bestehen,
- Mittel (17) zum Messen der bei jedem Auftankvorgang in den Behälter (2) eingeführten Kraftstoffmenge und
- Rechen- und Steuermittel (20) zur Berechnung der entsprechenden Zusatz-Menge, die in den Behälter (2) einzuführen ist, um die Zusatz-Konzentration in dem im Behälter (2) enthaltenen Kraftstoff auf einem vorbestimmten Wert zu halten, und zur Steuerung der Einspritzmittel (13, 14) zur Durchführung der Einspritzung der errechneten Zusatz-Menge, **dadurch gekennzeichnet, dass**
- die Einspritzmittel direkt in den Kraftstoff-Behälter (2) münden,
- die Messmittel einen Einrichtungs-Durchflussmesser (17) umfassen, der direkt im Füllstutzen (8) des Behälters (2) angeordnet ist.

2. Vorrichtung nach Anspruch 1, **dadurch gekennzeichnet, dass** die Pumpe (13) und der Einspritzer (14) hintereinander in einer mit dem Zusatz-Behälter (10) verbundenen Leitung (12) angeordnet sind.

3. Verwendung einer Vorrichtung nach Anspruch 1 oder 2 für die Einführung eines Zusatzes in einen Dieselkraftstoff-Behälter (2) eines Kraftfahrzeugs mit Dieselmotor, um die Zusatz-Konzentration im Kraftstoff auf einem Sollwert zu halten und die Betriebsbedingungen eines in der Abgasstrecke des Motors angeordneten Teilchenfilters zu verbessern.

## Claims

1. Device for the automatic introduction of an additive in metered amounts into the fuel tank (2) of a motor vehicle having a particulate filter placed on the exhaust line of the engine (1) of the vehicle, in order to maintain at a predetermined value the concentration of the additive in the fuel contained in the tank (2), the device being integrated in the vehicle and comprising:
- an additive tank (10) equipped with a gauge (18) for detecting a minimum level of additive in that tank (10) and with a gauge (19) for measuring the temperature of the additive in the tank (10),
- means (13, 14) for injecting additive which are connected to the additive tank (10) and to the fuel tank (2) and which are formed by a pump (13) and an injector (14),
- means (17) for measuring the amount of fuel introduced into the tank (2) in the course of each replenishing operation, and
- calculation and control means (20) permitting calculation of the corresponding amount of additive to be injected into the tank (2) in order to maintain at a predetermined value the concentration of additive in the fuel contained in the tank (2), and permitting control of the injection means (13, 14) in such a manner that they inject the calculated amount of additive,
**characterised in that**:
- the injection means open out directly in the fuel tank (2),
- the measuring means comprise a monodirectional flow meter (17) placed directly in the pipe (8) for filling the tank (2).

2. Device according to claim 1, **characterised in that** the pump (13) and the injector (14) are arranged one behind the other on a duct (12) connected to the additive tank (10).

3. Use of a device according to claim 1 or 2, for introducing an additive into a diesel oil tank (2) of a motor vehicle having a diesel engine, in order to maintain the concentration of additive in the fuel at a desired value and to improve the operating conditions of a particulate filter placed on the exhaust line of the engine.
